Europäisches Patentamt

European Patent Office

Office européen des brevets

(11) Veröffentlichungsnummer: **0 208 936**
**A2**

(12) # EUROPÄISCHE PATENTANMELDUNG

(21) Anmeldenummer: **86108270.9**

(22) Anmeldetag: **18.06.86**

(51) Int. Cl.⁴: **B 60 Q 1/04**

(30) Priorität: **18.07.85 DE 3525618**

(43) Veröffentlichungstag der Anmeldung: **21.01.87**
**Patentblatt 87/4**

(84) Benannte Vertragsstaaten: **DE FR GB IT**

(71) Anmelder: **ROBERT BOSCH GMBH, Postfach 50,
D-7000 Stuttgart 1 (DE)**

(72) Erfinder: **Baur, Eberhard, Silcherweg 8,
D-7453 Burladingen (DE)**
Erfinder: **Weber, Walter, Dipl.-Ing. (FH), Am
Herrenholz 12, D-8871 Reisensburg (DE)**

(54) **Scheinwerfer für Kraftfahzeuge.**

(57) Die Anordnung für das Schwenken des den Reflektor aufnehmenden Rahmens (11) in horizontaler Richtung umfaßt einen am Gehäuse (10) axial gesicherten Drehteil (15), der über eine Biegewelle (17) mit einem Winkelgetriebe (18) die Justierbewegung auf einen Schwenkteil (16) des Reflektors überträgt.

Die Biegewelle (17) mit dem Winkelgetriebe (18) wird insbesondere dann verwendet, wenn der Drehteil (15) und der Schwenkteil (16) quer zum Reflektor (10) stark versetzt sind und wenn eine fast hysteresefreie Justierung des Reflektors erforderlich ist.

R. 20 121
5.7.1985 Hk/Kc

ROBERT BOSCH GMBH, 7000 Stuttgart 1

Scheinwerfer für Kraftfahrzeuge

Stand der Technik

Die Erfindung betrifft einen Scheinwerfer für Kraftfahrzeuge nach der Gattung des Anspruchs 1. Ein derartiger Scheinwerfer ist aus der DE 22 17 831 B2 bekannt, dessen kuppelnder Umlenkmechanismus zwischen dem Drehabschnitt und dem Schwenkabschnitt ein am Gehäuse angelenkter einarmiger Hebel mit einer darin drehbar eingerasteten Mutter ist. Die Schwenkbarkeit des Hebels und Drehbarkeit der Mutter erfordern jeweils eine Toleranz, die u. U. in ihrer Gesamtheit die Justierung des Reflektors erschweren und verzögern. Der vorbekannte Umlenkmechanismus mit einem einarmigen Hebel ist jedoch dann nicht mehr verwendbar, wenn der Abstand des Drehabschnittes und des Schwenkabschnittes eine bestimmte Größe überschreitet.

Vorteile der Erfindung

Mit dem Scheinwerfer für Kraftfahrzeuge nach der Erfindung wird das im vorerwähnten Stand der Technik dargelegte Problem mit technisch einfachen Mitteln und sicher in der Funktion über die gesamte Betriebszeit des Schein-

...

werfers gelöst. Die Biegewelle und das Winkelgetriebe verursachen nur eine geringe Hysterese und ermöglichen einen
verhältnismäßig großen Abstand zwischen dem Drehteil und
dem Schwenkteil sowie eine engräumige Umlenkung.

Vorteilhafte Weiterbildungen der Erfindung sind in den
Unteransprüchen beschrieben. Mit Anspruch 2 wird ein
technisch einfach herstellbares und sicher wirkendes Winkelgetriebe vorgeschlagen, das in der Weiterbildung mit
Anspruch 3 eine einfache Baueinheit bildet. Mit Anspruch
4 erreicht man eine platzsparende Lagerung des getriebenen
Kegelrades, und Anspruch 5 weist einen Weg, um die Lagerung beider Kegelräder am Gehäuse mit wenig Teilen funktionssicher zu erreichen.

Die Verbindung der Biegewelle zum einen mit dem Drehabschnitt und zum andern mit dem treibenden Kegelrad wird
mit Anspruch 6 praxisnah gelöst und mit den Ansprüchen
7 und 8 zweckmäßig ausgestaltet. Mit Anspruch 9 wird eine
sichere Festlagerung des Reflektors am Gehäuse aufgezeigt,
und mit Anspruch 10 wird eine zweiteilige Lagerpfanne und
deren günstige Befestigung am Gehäuse vorgeschlagen.

Zeichnung

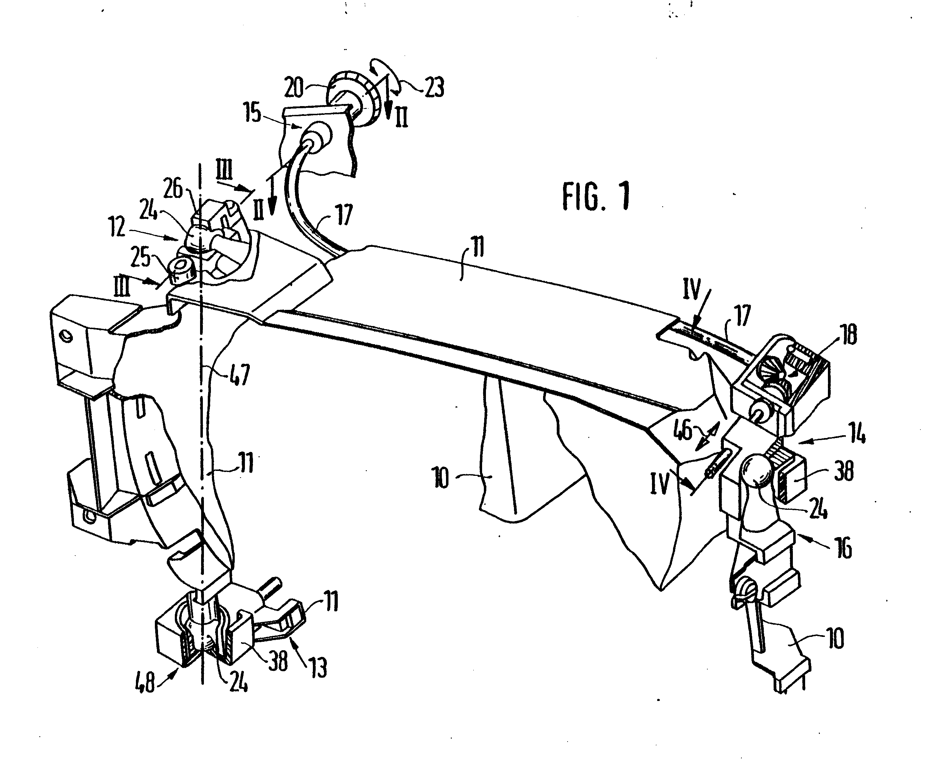

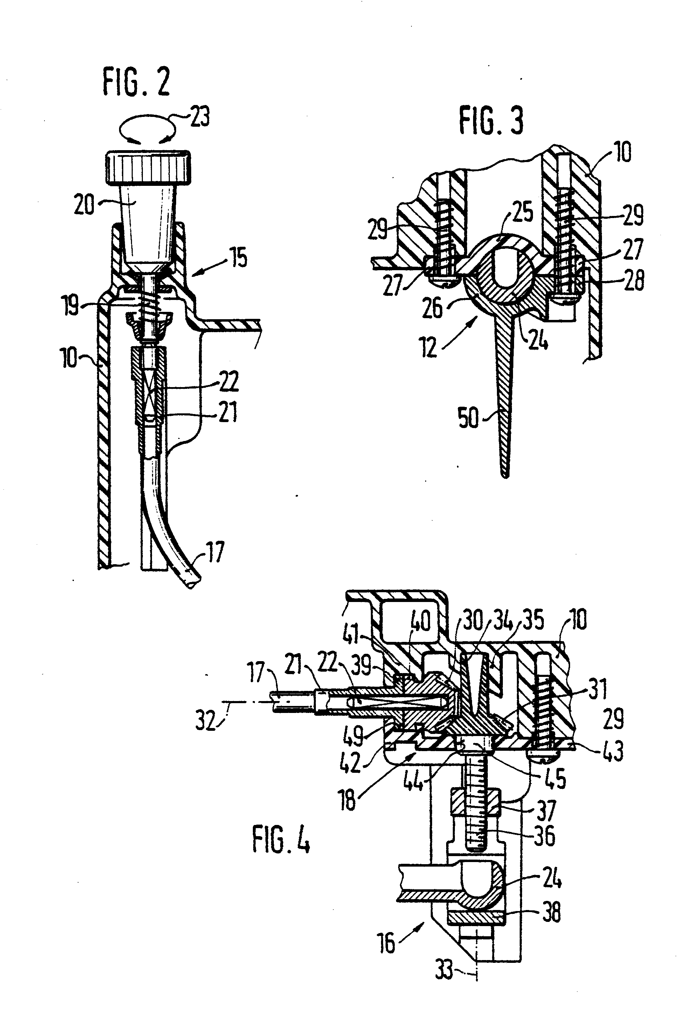

Ein Ausführungsbeispiel der Erfindung ist in der Zeichnung dargestellt und in der Figurenbeschreibung näher erläutert. Es zeigen: Figur 1 abschnittsweise von einem
Scheinwerfer für Kraftfahrzeuge dessen im Gehäuse schwenkbar gelagerten Reflektor und die vertikale Schwenkanordnung in raumbildlicher, verkleinerter Darstellung; Figur 2

...

den Drehabschnitt der Schwenkanordnung in Axialschnitt
gemäß Schnittführung II-II in Figur 1 in natürlicher
Größe; Figur 3 das Festlager in Diagonalschnitt gemäß
Schnittführung III-III in Figur 1 in natürlicher Größe;
und Figur 4 das Winkelgetriebe in Axialschnitt gemäß
Schnittführung IV-IV in Figur 1 in natürlicher Größe.

Beschreibung des Ausführungsbeispieles

Ein Scheinwerfer für Kraftfahrzeuge hat ein an der nicht
dargestellten Fahrzeug-Karosserie befestigtes Gehäuse 10
und einen darin mittels eines Festlagers 12 festgelegten,
einen nicht dargestellten Reflektor aufnehmenden Rahmen
11, der mittels einer Anordnung 13 und 14 in vertikaler
bzw. in horizontaler Richtung justierbar ist. Die Anordnung 14 umfaßt einen im Gehäuse 10 axialgesicherten
Drehteil 15 und einen am Reflektor 11 angelenkten Schwenkteil 16 sowie einen beide Abschnitte kuppelnden Umlenkmechanismus, den eine Biegewelle 17 und ein Winkelgetriebe
18 bilden.

Der Drehabschnitt in Figur 2 hat ein von der Rückseite
des Gehäuses 10 abstehendes Handrad 20 mit einem Bolzen
19, der im Gehäuse 10 drehbar, jedoch axial gesichert
ist. Die Biegewelle 17 und der Drehteil 15 sind mittels
einer formschlüssigen Steckkupplung verbunden; diese umfaßt eine Buchse 21 mit Innenprofil an der Biegewelle 17
und einen in das Innenprofil ragenden Profilstift 22,
der einstückig vom Bolzen 19 des Drehabschnittes 15 absteht. Eine Drehung des Handrades 20 gemäß Doppelpfeil 23 wird mithin auf die Biegewelle 17 übertragen.

Das Festlager 12 für den Reflektor 11 am Gehäuse 10 in Figur 3 ist als Kugelzapfenlager ausgebildet, dessen Kugelzapfen 24 vom Reflektor 11 einstückig absteht und dessen Lagerpfanne eine sphärische Halbpfanne 25 sowie ein sphärischer Lagerbügel 26 bilden.

Die Halbpfanne 25 hat zwei Lageraugen 27, der Lagerbügel 26 jedoch nur ein Lagerauge 28. Das eine Lagerauge 27 ist mittels einer Kopfschraube 29 an der Innenwand des Gehäuses 10 befestigt; in gleicher Weise sind das andere Lagerauge 27 gemeinsam mit dem Lagerauge 28 durch eine zweite Kopfschraube 29 befestigt. Vom Lagerbügel 26 steht ein Stift 50 ab, der das Aufsetzen oder Abnehmen des Lagerbügels 26 von der Halbpfanne 25 erleichtert.

Das als Kegelradgetriebe 18 ausgebildete Winkelgetriebe in Figur 4 hat ein treibendes Kegelrad 30 und ein getriebenes Kegelrad 31, die beide eine Geradverzahnung aufweisen und deren Achsen 32, 33 sich schneiden und einen rechten Winkel einschließen. Das aus Kunststoff hergestellte Kegelrad 31 hat einen hohlförmigen Zapfen 34, der in einer als Spurlager wirkenden Hülse 35 der Innenwand des Gehäuses 10 gelagert ist; koaxial hierzu und gegenüberliegend ist im Kegelrad 31 ein Gewindebolzen 36 eingeformt, der mit einer Mutter 37 des Abschnittes 16 zusammenwirkt; diese hat eine Lagerhülse 38 für die Aufnahme eines weiteren Kugelzapfens 24 des Reflektors 11 (Figur 1).

Die Steckkupplung besteht auch hier aus dem Profilstift 22, der in jeweils ein Innenprofil des Kegelrades 30 und der Buchse 21 der Biegewelle 17 formschlüssig eingreift. Die Buchse 21 und das stirnseitig anliegende Kegelrad 30 haben je einen Ringbund 39 bzw. 40; beide

0208936

20121

sind in einer Ringnut 49 gelagert, die eine Halbschale
41 des Gehäuses 10 und eine Halbschale 42 eines Lagerdeckels 43 bilden, so daß das Kegelrad 30 und die Biegewelle 17 drehbar, jedoch axial im Gehäuse 10 gesichert
sind. Der Lagerdeckel 43 hat außerdem eine Bohrung 44, in
der ein Lagerzapfen 45 mit einer Stirnschulter des Kegelrades 31 axial gesichert lagert und mithin die vorbestimmte Zuordnung zum treibenden Kegelrad 30 einnimmt.

Eine Drehung des Handrades 20 gemäß Doppelpfeil 23 (Figur
1) bewirkt über die Biegewelle 17 und das Winkelgetriebe
18 ein Verschieben gemäß Doppelpfeil 46 des Schwenkabschnittes 14, so daß der Kugelzapfen 24 den Reflektor 11
in horizontaler Richtung um eine im wesentlichen vertikale Achse 47 schwenkt; diese geht durch den Kugelzapfen
24 des Festlagers 12 und des Schwenkabschnittes 48 der
Anordnung 13 für die Justierung des Reflektors 11 in
vertikaler Richtung.

R. 20121

5.7.1985 Hk/Kc

0208936

ROBERT BOSCH GMBH, 7000 Stuttgart 1

Ansprüche

1. Scheinwerfer für Kraftfahrzeuge mit einem an der Karroserie
des Fahrzeugs befestigten Gehäuse, und mit einem im Gehäuse
festgelegten, einen Reflektor aufnehmenden Rahmen, der in
horizontaler und/oder vertikaler Richtung mittels einer Anordnung schwenkbar ist, die einen im Gehäuse axial gesicherten Drehteil und einen am Reflektor angelenkten Schwenkteil sowie einen beide Teile kuppelnden Umlenkmechanismus aufweist, dadurch gekennzeichnet, daß den Umlenkmechanismus eine Biegewelle (17) und ein Winkelgetriebe (18)
bilden.

2. Scheinwerfer nach Anspruch 1, dadurch gekennzeichnet,
daß das Winkelgetriebe (18) ein Kegelradgetriebe ist mit
einem treibenden Kegelrad (30) und einem getriebenen
Kegelrad (31) und daß beide Kegelräder (30, 31) eine Gradverzahnung aufweisen.

3. Scheinwerfer nach Anspruch 2, dadurch gekennzeichnet,
daß die Achse (32) des treibenden Kegelrades (30) und die
Achse (33) des getriebenen Kegelrades (31) sich schneiden und einen rechten Winkel einschließen.

...

0208936

20121

4. Scheinwerfer nach Anspruch 3, dadurch gekennzeichnet, daß das getriebene Kegelrad (31) einen in einer als Spurlager wirkenden Hülse (35) der Innenwand des Gehäuses (10) gelagerten Zapfen (34) und einen Gewindebolzen (36) aufweist, der mit einer Mutter (37) des Schwenkteiles (16) zusammenwirkt.

5. Scheinwerfer nach Anspruch 4, dadurch gekennzeichnet, daß die Innenwand des Gehäuses (10) und ein Lagerdeckel (43) eine Ringnut (49) bilden, in der ein Bund (39) des getriebenen Kegelrades (31) und ein Bund (40) einer Buchse (21) der Biegewelle (17) gelagert und axial gesichert sind.

6. Scheinwerfer nach Anspruch 4 oder 5, dadurch gekennzeichnet, daß das getriebene Kegelrad (31) einen Lagerzapfen (45) mit einer Stirnschulter aufweist und daß im Lagerdeckel (43) eine Bohrung (44) angeordnet ist, die mit dem Lagerzapfen (45) zusammenwirkt, so daß dessen Stirnschulter die vorbestimmte Zuordnung beider Kegelräder (30, 31) sichert.

7. Scheinwerfer nach einem der Ansprüche 3 bis 6, dadurch gekennzeichnet, daß die Biegewelle (17) mittels je einer formschlüssigen Steckkupplung (21, 22) einerseits mit dem treibenden Kegelrad (30) und andrerseits mit dem Drehabschnitt (15) verbunden ist.

8. Scheinwerfer nach Anspruch 7, dessen Drehabschnitt einen Bolzen aufweist, dadurch gekennzeichnet, daß die Steckkupplung (21, 22) die Buchse (21) mit Innenprofil an der Biegewelle (17) und einen in das Innenprofil ragenden Profilstift (22) aufweist, der entweder in ein Innenprofil des treibenden Kegelrades (31) eingesteckt ist oder einstückig vom Bolzen (19) des Drehabschnittes (15) absteht.

...

9. Scheinwerfer nach einem der vorgenannten Ansprüche mit einem als Kugelzapfenlager ausgebildetes Festlager für die schwenkbare Lagerung des Reflektors am Gehäuse, dadurch gekennzeichnet, daß der Kugelzapfen (24) des Festlagers (12) am Reflektor befestigt ist und in einer Halbpfanne (25) mit einem Lagerbügel (26) gesichert und darin sphärisch bewegbar ist.

10. Scheinwerfer nach Anspruch 9, dadurch gekennzeichnet, daß die Halbpfanne (25) an der Innenwand des Gehäuses (10) anliegt, daß der auf die Halbpfanne (25) aufgesetzte Lagerbügel (26) nur ein Lagerauge (28) aufweist und daß mittels je einer Schraube (29) zum einen das eine Lagerauge (27) der Halbpfanne (25) und zum andern deren zweites Lagerauge (27) mit dem Lagerauge (28) des Lagerbügels (26) am Gehäuse (10) befestigt sind.

11. Scheinwerfer nach Anspruch 9 oder 10, dadurch gekennzeichnet, daß vom Lagerbügel (26) ein Stift (50) absteht für das erleichterte Aufsetzen oder Abnehmen des Lagerbügels (26) von der Halbpfanne (25).

0208936

FIG. 1

FIG. 2

FIG. 3

FIG. 4